# EUROPEAN PATENT APPLICATION

(11) **EP 1 635 204 A1**
(43) Date of publication of application: **15.03.2006**
(21) Application number: 04021643.4
(22) Date of filing: 10.09.2004
(51) Int. Cl.: G02B 6/32, G02B 6/26

(54) **Glass fibre with integrated diffractive element on the top of its end face**

(71) Applicant: Schott AG, 55122 Mainz (DE)
(72) Inventor: Bhosale, Rohit, 84028 Landshut (DE)
(74) Representative: Fuchs Mehler Weiss & Fritzsche

(57) **Abstract**

The present invention relates to a fiber (7) for fiber glass optics consisting of optical glasses having two ends.

The fiber (7) is characterized in that at least one of the front ends is provided with diffractive/reflective optical elements (D/ROE's) (2).

## Description

### Background of the invention

### Field of the invention

The invention relates to a fiber for fiber glass optics and in particular to fiber collimators or fiber beam shaper. Up to now fiber collimators are made by using various techniques ranging from cleaved fibers and epoxied to a rod lens or fusing of cleaved fibers to a rod lens or sealing the lens and the fiber in a ferrule using soldering or similar attachment techniques. Fiber collimators are typically used in applications where the light output coming out of a fiber needs to be collimated for further use (Gaussian beam to Hat top output).

Up to now beam shapers have been used in a way that an end of a fiber sealed to or aligned with an optical element to shape the output of the fiber into a required form. This is typically achieved by using ball lenses aspheric lenses with active or passive alignment. Some applications use a fiber array like V groove array or a matrix array of fibers in silicon along with lens arrays to shape the beam into a required format. Other applications include use of fibers single mode or multi mode in conjunction with lens materials or optical materials.

One serious drawback of the known techniques are the long cycle times for aligning the fiber with other optical elements and therefore the high costs in mounting known fibers in a system.

### Summary of the invention

Accordingly it is an object of the invention to provide a fiber for fiber glass optics consisting of optical glasses which is easily and therefore relatively cost-effectively to be incorporated into an optical system with low cycle times. Active alignment of fiber with e.g. lens material should be made unnecessary.

With the foregoing and other objects in view there is provided in accordance with the invention a fiber for fiber glass optics consisting of optical glasses having two front ends which is characterized in that at least one end of the front ends is provided with diffractive/reflective optical elements (D/ROE's).

Creating D/ROE's on the at least one front end of the fiber replaces the lens material which had been used up to now since the D/ROE's themselves form an optical element coupling the beam from the fiber into another optical element. No cumbersome alignment between these two elements is required and thus the cycle times are much lower as compared as up to now.

The D/ROE's can be manufactured on the ends of the fibers on an individual basis or wafer basis. The fibers all stripped, cleaned and cleaved could be mounted in a carrier with appropriate hole size and firmly held in this carrier. In case of fiber arrays there would be no need for this step. This carrier end with the fiber end flush with it could be used as an accurate fixture to hold the fiber in the correct place and also as a substrate for creation of the D/ROE's. The D/ROE's can be produced using any of the established D/ROE manufacturing techniques like hot embossing, glass structuring or any other similar technique.

The D/ROE's can be formed in the optical glass material. The structure can be brought in into the front ends on an individual basis or wafer basis as already mentioned above.

Alternatively the D/ROE's can be formed in separate modules connected to the at least one front end. The separate module can be epoxied for instance to the front end.

According to one preferred embodiment of the invention the at least one front end of the fiber carrying D/ROE's is microstructured such as to act as beam shaper. According to a most preferred embodiment the fiber according to the present invention is characterized in that the at least one front end carrying D/ROE's is microstructured such as to act as beam shaper. Altematively the at least one front end carrying D/ROE's is microstructured such as to act as collimator. Collimated light is needed when coupling light coming from one fiber into another fiber. Up to now a collimator lens was necessary in order to achieve a satisfactory result.

According to the invention the D/ROE's can form an angle between 7° and 8° between the front end and the perpendicular line on the main axis of the fiber. With this feature back reflection can be avoided or insertion loss without cleaving the fiber at an angle can be reduced.

Applications where fibers are assembled into other elements like V grooves polished and aligned with lenses or other optical elements like arrayed wave guides (AWG) can be improved by using D/ROE's on the end of polished V groove arrays or similar assemblies to channel the output of such an array in a required format to increase efficiency and reduce alignment time and costs.

The most preferred fields of use are: transmission, collimation, focussing, polarization, rotation, filtering/selection, splitting and chromatic wavefront correction.

### Brief description of the drawings

The invention will be illustrated by considering embodiments according to the accompanying figures. Therefore,
- Fig. 1: is an schematic view onto one front end of the fiber,
- Fig. 2: is an diagrammatic sectional view of the front end of a fiber, and
- Fig. 3: is an diagrammatic view on an arrayed wave guide consisting of a plurality of fibers according to the invention.

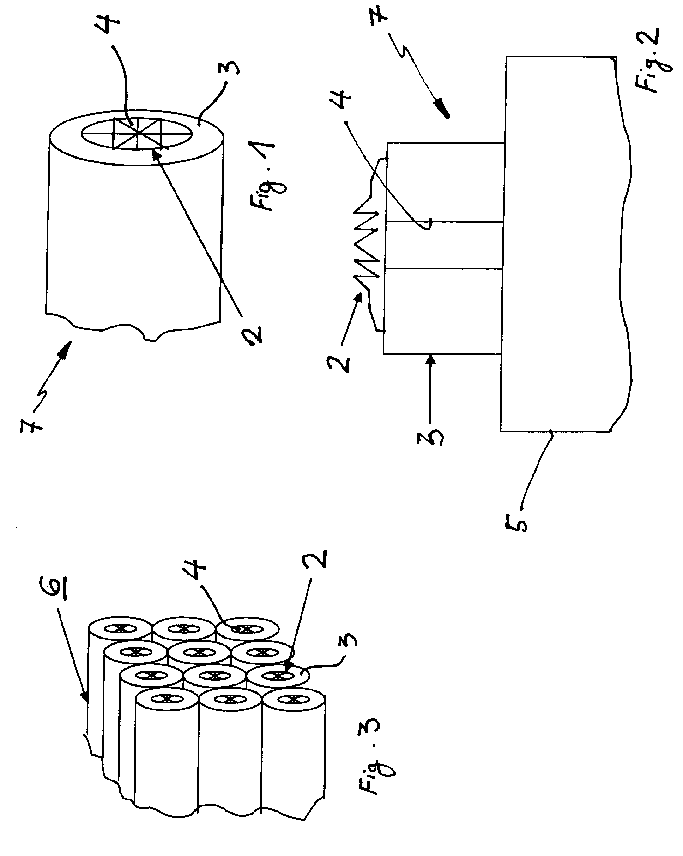

Referring now to figure 1 there is shown the diagrammatic view onto one front end of the fiber 7 according to the invention. The fiber 7 has an inner core 4 and an outer core 3, both cores consisting of optical glasses. At the front end of the inner core 4 there are arranged diffractive/reflective optical elements (D/ROE's) 2 shaping light leaving the inner core 4 into the desired form.

In figure 2 a diagrammatic sectional view of the front end of the fiber 7 is shown. The fiber 7 is protected by a plastic buffer 5. As becomes apparent from figure 2 the D/ROE's 2 mainly form light leaving or entering the inner core 4 of the fiber 7.

Finally, in figure 3 there is shown an arrayed wave guide 6 consisting of a plurality of fibers 7 being arranged in a compact matrix.

The advantage of the invention lies in the considerable reduction of efforts in mounting optical fibers or wave guides together since no alignment with optical elements like lenses is required.

## Claims

1. Fiber (7) for fiber glass optics consisting of optical glasses having two front ends, **characterized in that** at least one of the front ends is provided with diffractive/reflective optical elements (D/ROE's) (2).

2. Fiber (7) according to claim 1, **characterized in that** the D/ROE's (2) are formed in the optical glass material.

3. Fiber (7) according to claim 1, **characterized in that** the D/ROE's (2) are formed in separate modules connected to the at least one front end.

4. Fiber (7) according to any preceding claim, **characterized in that** the at least one front end carrying D/ROE's (2) is microstructured such as to act as beam shaper.

5. Fiber (7) according to claim 4, **characterized in that** the at least one front end carrying D/ROE's (2) is microstructured such as to act as collimator.

6. Fiber (7) according to one of claims 1 to 3, **characterized in that** the at least one front end carrying D/ROE's (2) is microstructured such as to act as beam pointer.

7. Fiber (7) according to any preceding claim, **characterized in that** the D/ROE's (2) from an angle between 7 and 8° between the front end and the perpendicular line on the main axis of the fiber 7.

8. Arrayed wave guide, **characterized in that** it consists of a plurality of fibers 7 according to one of the claims 1 through 7.
